# FASCICULE DE BREVET EUROPEEN

(11) **EP 1 072 338 B1**
(45) Date de publication et mention de la délivrance du brevet: **15.10.2003**
(21) Numéro de dépôt: 00402017.8
(22) Date de dépôt: 12.07.2000
(51) Int. Cl.: B21J 15/50, B23B 47/28

(54) **Outil pour démonter des rivets et procédé de démontage de rivets correspondant**
Verfahren und Vorrichtung zum Entfernen von Nieten
Rivet removing tool and process

(30) Priorité: 19.07.1999 FR 9909347
(43) Date de publication de la demande: 31.01.2001
(73) Titulaire: Alstom, 75116 Paris (FR)
(72) Inventeur: Thomas, Bernard, 17220 Sainte Soulle (FR); Prevost, Alain, 17180 Perigny (FR)
(74) Mandataire: de Lambilly Delorme, Marie Pierre

(56) Documents cités:
- US-A- 2 853 723
- US-A- 3 620 635
- US-A- 4 596 499
- US-A- 5 035 529
- US-A- 5 039 260

## Description

La présente invention concerne un outil pour démonter des rivets.

L'invention s'applique en particulier au démontage des assemblages réalisés au moyen de rivets aveugles.

De tels rivets permettent d'assembler des pièces dont un seul côté est accessible.

Une fois posé, un rivet aveugle présente une tige traversant les pièces assemblées et une tête en saillie sur le côté accessible des pièces. La tête comprend un bulbe de verrouillage qui s'étend latéralement par rapport à la tige.

Pour démonter ces rivets, on utilise généralement des meuleuses à disque portatives, ou en cas de difficulté d'accès, un burin et un marteau pour venir supprimer le bulbe de verrouillage. Il est alors possible de chasser la tige du rivet.

L'opération de suppression du bulbe est longue et fastidieuse et entraîne presque toujours des dégradations importantes des pièces assemblées.

Il est également connu du document US 5 039 260, un outil pour démonter des rivets comprenant une fraise rotative et une embase présentant une extrémité avant d'appui sur une surface voisine de la tête du rivet à démonter, la fraise étant mobile en translation le long de son axe de rotation par rapport à l'embase entre une position reculée et une position avancée. Toutefois, l'utilisation de cet outil présente également l'inconvénient de dégrader les pièces assemblées car l'extrémité avant de la fraise peut dépasser largement l'extrémité avant de l'embase et donc venir usiner les pièces assemblées.

L'invention a pour but de résoudre ce problème en fournissant un outil pour démonter des rivets permettant notamment d'éliminer les bulbes des rivets aveugles de manière simple et fiable tout en limitant l'endommagement des pièces assemblées.

A cet effet, l'invention a pour objet un outil pour démonter des rivets, comprenant:
- une fraise rotative présentant une extrémité avant d'usinage de la tête d'un rivet à démonter, et
- une embase présentant une extrémité avant d'appui sur une surface voisine de la tête du rivet à démonter,
- la fraise étant mobile en translation le long de son axe de rotation par rapport à l'embase entre une position éloignée et une position rapprochée de l'extrémité avant de l'embase, caractérisé en ce que, dans sa position avancée, l'extrémité avant de la fraise est située au même niveau ou légèrement en arrière de l'extrémité avant de l'embase.

Selon des modes particuliers de réalisation, l'outil peut comprendre l'une ou plusieurs des caractéristiques suivantes, prise(s) isolément ou selon toutes les combinaisons techniquement possibles :
- il comprend des moyens de réglage de la distance séparant les extrémités avant de la fraise et de l'embase lorsque la fraise est dans sa position rapprochée de l'extrémité avant de l'embase,
- il comprend des moyens de rappel de la fraise vers sa position éloignée de l'extrémité avant de l'embase,
- l'embase est une embase de centrage de la fraise par rapport à la tête du rivet à démonter,
- l'embase entoure la fraise,
- l'embase présente un logement débouchant dans son extrémité avant et dans lequel la fraise est disposée,
- l'embase présente des ouvertures latérales d'évacuation des copeaux formés lors de l'usinage par la fraise de la tête du rivet à démonter,
- l'embase comprend au moins une surface de guidage des copeaux produits lors de l'usinage par la fraise de la tête du rivet à démonter, ladite surface de guidage divergeant depuis l'extrémité avant de l'embase vers ses ouvertures latérales d'évacuation des copeaux,
- il comprend une collerette radiale extérieure de protection,
- la collerette de protection est située, par rapport aux ouvertures latérales d'évacuation des copeaux, axialement en arrière et radialement vers l'extérieur,
- l'extrémité avant de la fraise présente des dents axiales entourant un espace central de réception de la tige du rivet à démonter au cours de l'usinage de sa tête par la fraise,
- l'espace de réception de la tige du rivet à démonter est un espace de centrage de la fraise sur la tige du rivet au cours de l'usinage de sa tête par la fraise,
- l'extrémité avant de la fraise présente quatre dents axiales,
- les dents de la fraise forment chacune un angle de coupe d'environ 3° par rapport à un plan orthogonal à l'axe de rotation de la fraise.

L'invention a en outre pour objet un procédé de démontage de rivets, caractérisé en ce qu'on appuie l'extrémité avant de l'embase d'un outil pour démonter des rivets tel que défini ci-dessus sur une surface voisine de la tête d'un rivet à démonter, en ce qu'on entraîne la fraise en rotation tout en l'amenant vers sa position rapprochée de l'extrémité avant de l'embase pour usiner la tête du rivet, puis on élimine la tige du rivet.

L'invention sera mieux comprise à la lecture de la description qui va suivre, donnée uniquement à titre d'exemple, et faite en se référant aux dessins annexés, sur lesquels :
- la figure 1 est une vue schématique, en perspective et partiellement arrachée, d'un outil selon l'invention prêt à démonter un rivet aveugle,
- la figure 2 est une vue schématique en perspective éclatée de l'outil de la figure 1,
- la figure 3 est une vue schématique, en perspective, agrandie et partiellement arrachée de la fraise et de l'embase de l'outil de la figure 1, et
- la figure 4 est une vue schématique en coupe longitudinale de l'outil de la figure 1.

Les termes « avant » et « arrière » utilisés ci-après sont uniquement relatifs et ne doivent pas être interprétés limitativement.

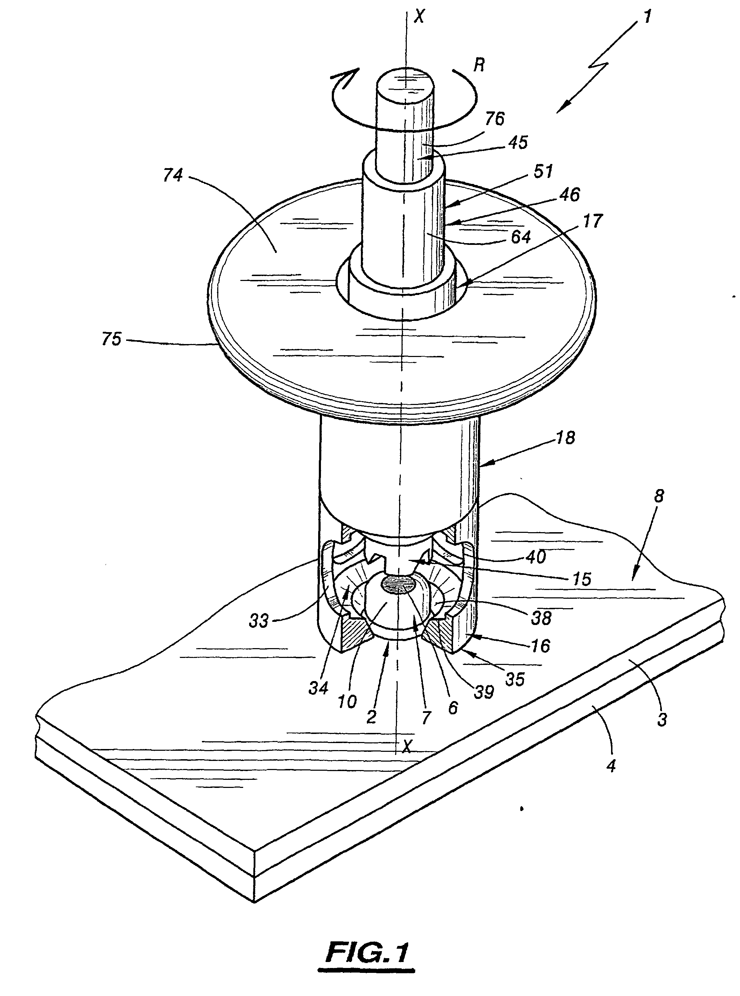

La figure 1 illustre un outil 1 pour démonter des rivets en position de démontage d'un rivet aveugle 2 assemblant deux plaques 3 et 4.

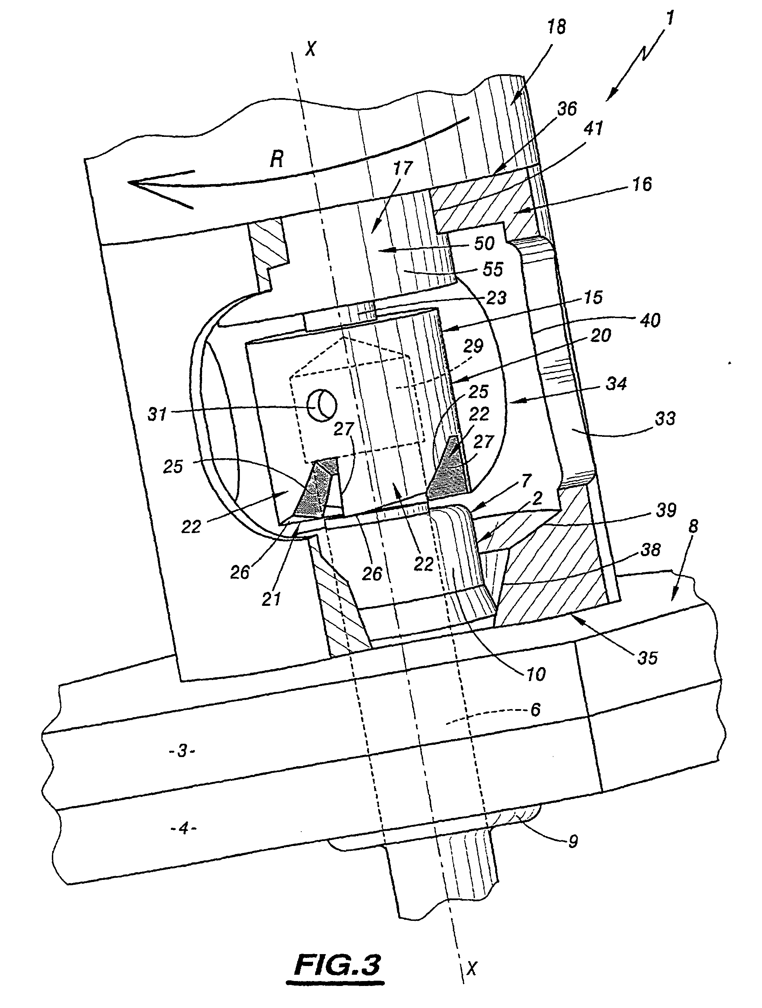

Comme illustré plus particulièrement par la figure 3, le rivet 2 comprend une tige 6 traversant les plaques 3 et 4, une tête de verrouillage 7 située en saillie sur le côté arrière 8 accessible des pièces 3 et 4, et une collerette 9 de verrouillage ou « rivure » située de l'autre côté des pièces 3 et 4.

La tête 7 comprend un bulbe 10 de verrouillage solidaire de l'extrémité arrière de la tige 6 et l'entourant. Le bulbe 10 s'étend donc latéralement par rapport à la tige 6 et également en saillie vers l'arrière depuis le côté 8 accessible des plaques 3 et 4.

La collerette 9 est située en arrière de l'extrémité avant de la tige 6. Le bulbe 10 et la collerette 9 prennent appui respectivement sur les plaques 3 et 4 en les maintenant accolés.

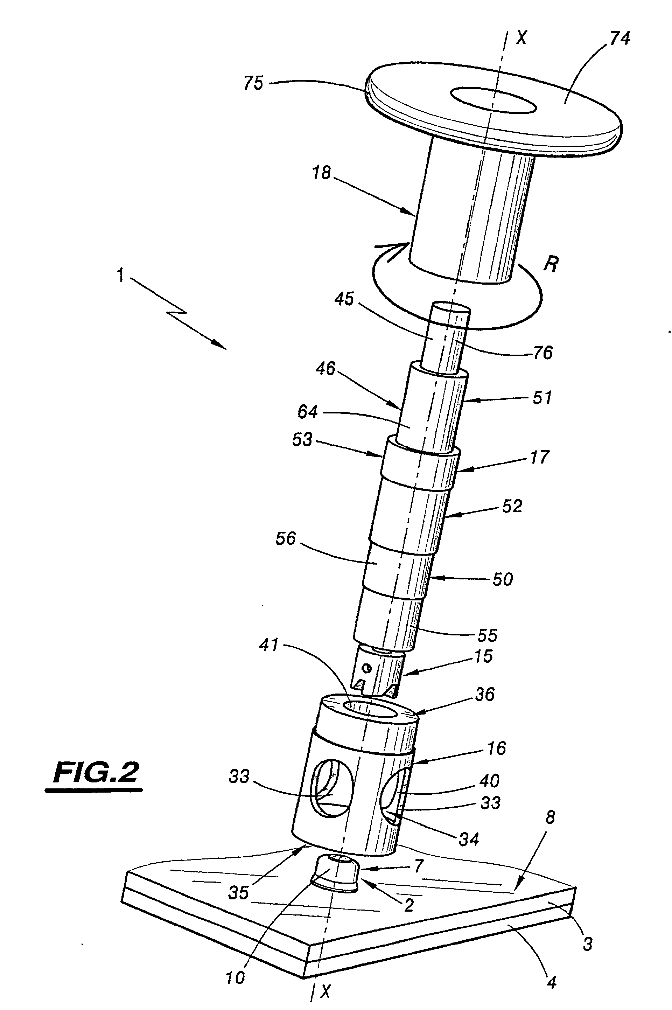

Comme illustré par les figures 1 et 2, l'outil 1 a une forme générale de révolution autour d'un axe longitudinal X-X et comprend essentiellement :
- une fraise 15,
- une embase 16,
- un ensemble 17 de support et d'entraînement de la fraise 15, et
- une bague 18 de manipulation de l'outil 1 et de protection d'un utilisateur.

Comme on le voit sur la figure 3, la fraise 15 est du type en cloche et comprend un corps 20 de révolution autour de l'axe X-X. L'extrémité avant 21 du corps 20 est munie de quatre dents axiales 22 identiques et régulièrement réparties angulairement autour de l'axe X-X. Le corps 20 est prolongé à l'arrière par une queue 23 de montage filetée.

Chaque dent 22 présente successivement, dans le sens de rotation R de la fraise 15 autour de l'axe X-X, une face de dépouille 25, une face de coupe 26, et une face de contre-dépouille 27. La face de coupe 26 est inclinée, dans le sens R et vers l'avant, d'environ 3° par rapport à un plan orthogonal à l'axe X-X. La face de dépouille 25 est inclinée dans le même sens beaucoup plus fortement par rapport à ce même plan. La face de contre-dépouille 27 est inclinée dans le même sens légèrement par rapport à l'axe X-X.

Un évidement central 29 débouchant dans l'extrémité avant 21 est ménagé dans le corps 20 de la fraise 15.

L'évidement 29, de révolution autour de l'axe X-X, comprend depuis l'extrémité avant 21 un tronçon avant cylindrique entouré par les dents 22, un tronçon intermédiaire cylindrique de diamètre plus important, et un tronçon arrière conique. Un orifice radial 31 est ménagé dans le corps 20 au niveau du tronçon intermédiaire de l'évidement 29.

La fraise 15 est réalisée d'une seule pièce en acier trempé hautes performances.

L'embase 16 est sous forme d'une douille de forme générale cylindrique de révolution autour de l'axe X-X, et dont la paroi latérale présente quatre ouvertures oblongues 33, allongées selon l'axe X-X et régulièrement réparties angulairement autour de cet axe.

Comme on le voit sur les figures 1 et 3, l'embase 16 offre intérieurement un passage 34 qui débouche dans sa tranche ou extrémité avant 35 et dans sa tranche ou extrémité arrière 36. Ces deux tranches 35 et 36 de l'embase 16 sont toutes deux planes, annulaires et orthogonales à l'axe X-X.

Le passage 34 comprend successivement de l'avant vers l'arrière un premier tronçon conique 38 divergeant vers l'arrière, un deuxième tronçon 39 conique divergeant plus fortement vers l'arrière, un troisième tronçon 40 cylindrique situé au niveau des ouvertures oblongues 33, puis un quatrième tronçon 41 cylindrique de diamètre plus réduit que le tronçon 40.

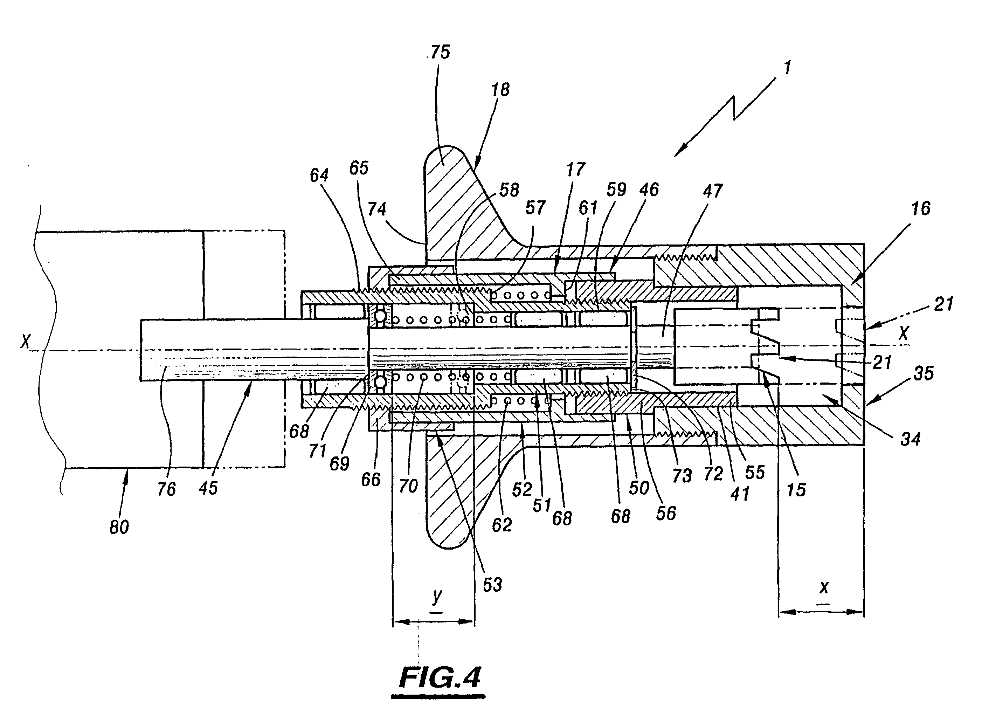

Comme illustré par la figure 4, l'ensemble 17 de support et d'entraînement de la fraise 15 comprend un arbre central 45 d'axe X-X et un système 46 de guidage de cet arbre 45. On notera que sur la figure 4 la fraise 15 et l'embase 16 ont été représentées très schématiquement.

La fraise 15 est montée par l'intermédiaire de sa queue 23 filetée sur l'extrémité avant 47 taraudée de l'arbre 45.

Le système 46 de guidage de l'arbre 45 comprend trois manchons 50 à 52 de forme générale de révolution autour de l'axe X-X et de profils longitudinaux étagés, et une douille 53 également de révolution autour de l'axe X-X.

Le premier manchon 50 comprend un tronçon avant 55, et un tronçon arrière 56 de diamètre extérieur plus grand que celui du tronçon avant 55. Le tronçon avant 55 est emmanché à force dans l'extrémité arrière de l'embase 16, au travers du quatrième tronçon 41 de son passage central 34.

L'embase 16 et le premier manchon 50 sont donc solidaires.

Le deuxième manchon 51 a des profils longitudinaux intérieurs et extérieurs étagés et présente ainsi un épaulement extérieur 57 et un épaulement intérieur 58. Son tronçon avant 59, de diamètre extérieur plus réduit, est vissé librement à l'intérieur du tronçon arrière 56 du premier manchon 50.

Le troisième manchon 52 entoure extérieurement une partie du tronçon arrière 56 du manchon 50 et une partie du deuxième manchon 51. Le troisième manchon 52 prend appui axialement par l'intermédiaire d'une collerette intérieure 61 crantée à l'avant sur l'extrémité arrière du premier manchon 50 qui est elle-même crantée vers l'arrière. Les crans de la collerette 61 et de l'extrémité arrière du premier manchon 50 n'ont pas été représentés sur la figure 4 pour plus de clarté.

Un ressort hélicoïdal 62 s'étend autour du tronçon avant 59 du deuxième manchon 51 entre son épaulement extérieur 57 et la collerette intérieure 61 du troisième manchon 52.

Par ailleurs, le troisième manchon 52 est relié au deuxième manchon 51 par un clavetage longitudinal glissant non représenté. Ainsi, ces manchons 51 et 52 sont solidaires en rotation autour de l'axe X-X mais peuvent coulisser l'un par rapport à l'autre le long de cet axe.

La douille 53 est vissée à force sur le tronçon arrière 64 du deuxième manchon 51 et recouvre extérieurement l'extrémité arrière 65 du troisième manchon 52. La douille 53 prend appui axialement sur l'extrémité arrière 65 du troisième manchon 52 par l'intermédiaire du fond 66 de cette douille 53.

Le deuxième manchon 51 est alors verrouillé par rapport au premier manchon 50 par le vissage à force de la douille 53 contre le troisième manchon 52. Les manchons 50 à 52, la douille 53 et l'embase 16 sont alors solidaires.

L'arbre 45 est reçu à rotation dans le deuxième manchon 51 par l'intermédiaire de trois roulements à aiguilles 68 espacés axialement les uns des autres. Plus particulièrement deux roulements à aiguilles 68 sont disposés à l'intérieur du tronçon avant 59 du deuxième manchon 51 et un roulement à aiguilles 68 est disposé à l'intérieur du tronçon arrière du deuxième manchon 51.

Une butée à billes 69 est disposée radialement entre le tronçon arrière du deuxième manchon 51 et l'arbre 45, et axialement à l'avant du roulement à aiguilles 68 arrière. Un ressort hélicoïdal 70 prend appui axialement, d'une part, à l'avant sur le roulement à aiguilles 68 intermédiaire, et, d'autre part, à l'arrière sur la butée à billes 69 qui prend elle-même appui axialement en arrière sur un épaulement 71 de l'arbre 45.

Un circlips 72 est disposé autour de l'arbre 45 en avant de la tranche avant 73 du deuxième manchon 51.

La bague de protection 18 est vissée à force par son extrémité avant autour de l'extrémité arrière de l'embase 16. Cette bague 18 s'étend le long de l'axe X-X en masquant le manchon 50 et en partie le manchon 52 et la douille 53 du système 46 de guidage de l'arbre 45. La bague 18 est munie à son extrémité arrière 74 d'une collerette radiale extérieure 75.

La fraise 15 est disposée dans le passage 34 de l'embase 16 qui forme donc un logement de réception pour la fraise 15. L'extrémité arrière 76 de l'arbre 45 fait saillie vers l'arrière depuis l'extrémité arrière du manchon 51 qui fait saillie elle-même vers l'arrière depuis l'extrémité arrière 74 de la bague 18.

L'arbre 45, et donc la fraise 15 qu'il porte, peut pivoter librement autour de l'axe X-X par rapport au système de guidage 46 grâce aux roulements à aiguilles 68.

De plus, l'arbre 45, et donc la fraise 15, peut coulisser axialement par rapport aux manchons 50 et 51 et à l'embase 16 qui sont solidaires axialement les uns des autres.

Plus précisément, la fraise 15 peut coulisser axialement par rapport à l'embase 16 entre une position reculée, dans laquelle les extrémités avant respectives 21 et 35 de la fraise 15 et de l'embase 16 sont éloignées l'une de l'autre, comme illustré en trait fort sur la figure 4, et une position avancée, dans laquelle ces deux extrémités avant 21 et 35 sont rapprochées l'une de l'autre, comme représenté schématiquement en traits mixtes à deux tirets sur la figure 4.

Plus précisément, dans cette dernière position, les parties les plus en avant des faces de coupe 26 des dents 22 de la fraise 15 sont situées au même niveau ou légèrement en arrière de la tranche avant plane 35 de l'embase 16. La butée à billes 69 est alors en appui sur l'épaulement intérieur 58 du deuxième manchon 51.

Dans la position reculée, le circlips 72 est en butée contre la tranche avant 73 du deuxième manchon 51 et l'extrémité avant 21 de la fraise 15 est située nettement en arrière de l'extrémité avant 35 de l'embase 16.

La course x de la fraise 15 entre ses deux positions est égale à la distance axiale y séparant la bague à billes 69 et l'épaulement intérieur 58 du deuxième manchon 51 lorsque le circlips 72 est appuyé contre la tranche avant 73 du deuxième manchon 51'.

Le ressort hélicoïdal 70 est mis en compression lorsque la fraise 15 est déplacée vers sa position avancée et rappelle donc celle-ci dans sa position reculée.

Pour utiliser l'outil 1, on relie l'extrémité arrière 76 de l'arbre 45 à une perceuse 80 portative, électrique ou pneumatique, représentée schématiquement uniquement sur la figure 4. La liaison entre la perceuse 80 et l'arbre 45 doit permettre la transmission de couples importants et peut être obtenue à l'aide d'un embout conique, ou à l'aide de systèmes à cannelures ou à clavettes.

La fraise 15 est alors dans sa position reculée.

On vient placer l'embase 16 autour de la tête 7 du rivet 2 à démonter comme représenté sur les figures 1 et 3.

La tranche 35 de l'embase 16 est alors en appui sur le côté 8 de la plaque 3 autour de la tête 7 du rivet. La tête 7 du rivet 2 est située à l'intérieur des tronçons 38 et 39 du passage 34 de l'embase 16.

Le diamètre avant du tronçon 39 est adapté à la taille du bulbe 10 du rivet 2 de sorte qu'un très léger jeu radial existe entre ceux-ci.

La tige 6 du rivet 2 est alors centrée sur l'axe X-X.

Un tel positionnement peut être assuré manuellement grâce à la collerette 75 de la bague 18.

On maintient ensuite l'embase 16 dans cette position grâce à la collerette 75 de la bague 18 puis, par l'intermédiaire de la perceuse 80, on entraîne en rotation la fraise 15 dans le sens R tout en exerçant une force vers l'avant sur l'arbre 45 et donc sur la fraise 15 pour l'amener en contact du bulbe 10.

Les dents 22 viennent alors usiner le bulbe 10 du rivet 2 en produisant des copeaux. Les copeaux produits sont guidés par les tronçons 38 et 39 du passage 34 de l'embase 16 vers ses ouvertures latérales 33. Les copeaux fractionnés sont ensuite évacués par ces ouvertures 33. La collerette 75 protège l'utilisateur d'éventuelles projections vers l'arrière des copeaux fractionnés.

Au fur et à mesure de l'usinage du bulbe 10, la fraise 15 avance sous l'action de la force exercée vers l'avant sur l'arbre 45. La tige 6 du rivet 2 pénètre alors progressivement dans l'évidement 29 de la fraise 15. Le diamètre du tronçon avant de l'évidement 29 est légèrement supérieur à celui de la tige 6. Ainsi, l'évidement 29 qui reçoit la tige 6 assure le centrage de la fraise 15 sur la tige 6, fonction qui ne peut plus être assurée par l'embase 16 au fur et à mesure de l'usinage du bulbe 10.

L'usinage du bulbe 10 se poursuit jusqu'à ce que la fraise 15 atteigne sa position avancée.

Lorsque la fraise 15 atteint cette position, le bulbe 10 est alors éliminé sans que la fraise 15 ne soit entrée en contact avec la plaque 3.

On arrête alors de solliciter l'arbre 45 vers l'avant et le ressort 70, qui a été comprimé lors de l'avance de la fraise 15, ramène cette dernière dans sa position reculée, prête à usiner le bulbe d'un autre rivet. On vient ensuite chasser la tige 6 des plaques 3 et 4 à l'aide d'un chasse-goupilles et le rivet 2 est ainsi démonté.

L'outil 1 permet donc de démonter les rivets aveugles de manière simple, fiable, rapide et répétitive, en limitant l'endommagement des pièces assemblées par ces rivets.

L'outil 1 peut bien sur être utilisé pour démonter des rivets non-aveugles et de tous types.

L'embase 16 a des dimensions inférieures ou égales à celles de la tête de l'outil à river utilisé pour monter le rivet 2 à démonter. Ainsi, l'outil 1 permettra le démontage du rivet 2 quelque soit l'accessibilité de la zone où il a été monté.

L'outil 1 pourra donc être utilisé dans des zones dont l'accessibilité ne permet pas l'utilisation d'un marteau et d'un burin.

L'embase 16 et la fraise 15 ont des dimensions adaptées à celles des rivets 2 à démonter pour permettre respectivement d'assurer le centrage de la fraise 15 sur les tiges 6 des rivets 2 et éviter l'entrée en contact des dents 22 de la fraise 15 avec ces tiges 6 qui sont réalisées généralement en matériaux plus durs que ceux des bulbes 10. Grâce à cette dernière caractéristique, les risques de rupture de la fraise 15 sont limités.

L'angle de coupe d'environ 3° des dents 22 de la fraise 15 est particulièrement adapté à l'usinage des bulbes 10 de rivets 2.

Par ailleurs, les angles de dépouille et de contre-dépouille sont étudiés pour garantir la bonne continuité et la qualité de la coupe.

L'orifice 31 de la fraise 15 permet, par introduction d'une tige d'acier dans celui-ci, de changer la fraise 15 par vissage/dévissage.

Pour assurer que la fraise 15 en position avancée reste juste au niveau ou légèrement en arrière de la tranche avant 35 de l'embase 16, il peut être nécessaire de modifier la position axiale relative des manchons 50 et 51.

Pour ce faire, on dévisse et on retire la bague 18 puis la douille 53.

On vient ensuite tourner le troisième manchon 52 qui est solidaire en rotation du deuxième manchon 51. Le deuxième manchon 51 est alors vissé ou dévissé par rapport au premier manchon 50. La position axiale des manchons 50 et 51 est ainsi modifiée. On peut alors revisser à force la douille 53 puis la bague 18, la douille 53 de verrouillage fixant le réglage choisi.

Ainsi, le système de guidage 46 permet de régler la position avancée de la fraise 15, par exemple pour prendre en compte son usure.

Ce réglage est assuré à quelques centièmes de millimètres près grâce au pas du filetage reliant les manchons 50 et 51 et au pas des crans reliant les manchons 50 et 52 au niveau de la collerette intérieure 61 et de l'extrémité arrière du premier manchon 50.

## Revendications

1. Outil (1) pour démonter des rivets (2), comprenant :
- une fraise rotative (15) présentant une extrémité avant (21) d'usinage de la tête (7) d'un rivet à démonter, et
- une embase (16) présentant une extrémité avant (35) d'appui sur une surface (8) voisine de la tête du rivet à démonter,
la fraise (15) étant mobile en translation le long de son axe de rotation (X-X) par rapport à l'embase (16) entre une position reculée et une position avancée, **caractérisée en ce que**, dans sa position avancée, l'extrémité avant (21) de la fraise (15) est située au même niveau ou légèrement en arrière de l'extrémité avant (35) de l'embase (16).

2. Outil selon la revendication 1, **caractérisé en ce qu'**il comprend des moyens (46) de réglage de la distance séparant les extrémités avant (21, 35) de la fraise (15) et de l'embase (16) lorsque la fraise (15) est dans sa position avancée.

3. Outil selon la revendication 1 ou 2, **caractérisé en ce qu'**il comprend des moyens (70) de rappel de la fraise (15) vers sa position reculée.

4. Outil selon l'une quelconque des revendications 1 à 3, **caractérisé en ce que** l'embase (16) est une embase de centrage de la fraise (15) par rapport à la tête (7) du rivet (2) à démonter.

5. Outil selon l'une quelconque des revendications 1 à 4, **caractérisé en ce que** l'embase (16) entoure la fraise (15).

6. Outil selon la revendication 5, **caractérisé en ce que** l'embase (16) présente un logement (34) débouchant dans son extrémité avant (35) et dans lequel la fraise (15) est disposée.

7. Outil selon l'une quelconque des revendications 1 à 6, **caractérisé en ce que** l'embase (16) présente des ouvertures latérales (33) d'évacuation des copeaux formés lors de l'usinage par la fraise (15) de la tète (7) du rivet à démonter.

8. Outil selon la revendication 7, **caractérisé en ce que** l'embase (16) comprend au moins une surface de guidage (38, 39) des copeaux produits lors de l'usinage par la fraise (15) de la tête (7) du rivet à démonter, ladite surface de guidage (38, 39) divergeant depuis l'extrémité avant (35) de l'embase vers ses ouvertures latérales (33) d'évacuation des copeaux.

9. Outil selon l'une quelconque des revendications 1 à 8, **caractérisé en ce qu'**il comprend une collerette radiale extérieure (74) de protection.

10. Outil selon la revendication 9 prise en combinaison avec la revendication 7 ou 8, **caractérisé en ce que** la collerette (74) de protection est située, par rapport aux ouvertures latérales (33) d'évacuation des copeaux, axialement en arrière et radialement vers l'extérieur.

11. Outil selon l'une quelconque des revendications 1 à 10, **caractérisé en ce que** l'extrémité avant (21) de la fraise (15) présente des dents axiales (22) entourant un espace central (29) de réception de la tige (6) du rivet (2) à démonter au cours de l'usinage de sa tète (7) par la fraise (15).

12. Outil selon la revendication 11, **caractérisé en ce que** l'espace (29) de réception de la tige (6) du rivet à démonter est un espace de centrage de la fraise (15) sur la tige (6) du rivet (2) au cours de l'usinage de sa tète (7) par la fraise (15).

13. Outil selon la revendication 11 ou 12, **caractérisé en ce que** l'extrémité avant (21) de la fraise (15) présente quatre dents axiales (22).

14. Outil selon l'une quelconque des revendications 11 à 13, **caractérisé en ce que** les dents (22) de la fraise forment chacune un angle de coupe d'environ 3° par rapport à un plan orthogonal à l'axe de rotation (X-X) de la fraise (15).

15. Procédé de démontage de rivets (2), **caractérisé en ce qu'**on appuie l'extrémité avant (35) de l'embase (16) d'un outil (1) pour démonter des rivets selon l'une quelconque des revendications 1 à 14 sur une surface voisine de la tête (7) d'un rivet (2) à démonter, **en ce qu'**on entraîne la fraise (15) en rotation tout en l'amenant vers sa position avancée pour usiner la tète (7) du rivet, puis on élimine la tige (6) du rivet (2).

## Patentansprüche

1. Vorrichtung (1) zum Entfernen von Nieten (2) mit:
einer Hackfräse (15) mit einem vorderen Ende (21) für die Bearbeitung des Kopfes (7)
eines zu entfernenden Nietes, und
einem Ansatz (16) mit einem vorderen Ende (35) zum Abstützen auf einer Fläche (8), die an den Kopf des zu entfernenden Nietes angrenzt,
wobei die Fräse (15) gegenüber dem Ansatz (16) zwischen einer eingefahrenen und einer ausgefahrenen Position entlang ihrer Drehachse (X-X) in der Translation beweglich ist, **dadurch gekennzeichnet, dass** das vordere Ende (21) der Fräse in ihrer ausgefahrenen Position auf gleicher Höhe mit dem Ansatz (16) oder leicht zurückgesetzt von dem vorderen Ende (35) des Ansatzes (16) angeordnet ist.

2. Vorrichtung nach Anspruch 1, **dadurch gekennzeichnet, dass** sie Elemente (46) für die Einstellung des Abstandes zwischen den vorderen Enden (21, 35) der Fräse (15) und dem Ansatz (16) besitzt, wenn sich die Fräse (15) in ihrer ausgefahrenen Position befindet.

3. Vorrichtung nach einem der vorhergehenden Ansprüche, **dadurch gekennzeichnet, dass** sie Rückholelemente (70) für die Fräse (15) in Richtung ihrer eingefahrenen Position besitzt.

4. Vorrichtung nach einem der vorhergehenden Ansprüche, **dadurch gekennzeichnet, dass** es sich bei dem Ansatz (16) um einen Zentrieransatz (15) gegenüber dem Kopf (7) des zu entfernenden Nietes (2) handelt.

5. Vorrichtung nach einem der vorhergehenden Ansprüche, **dadurch gekennzeichnet, dass** der Ansatz (16) die Fräse (15) umgibt.

6. Vorrichtung nach Anspruch 5, **dadurch gekennzeichnet, dass** der Ansatz (16) eine Aufnahme (34) besitzt, die in sein vorderes Ende (35) einmündet, und in dem die Fräse (15) angeordnet ist.

7. Vorrichtung nach einem der vorhergehenden Ansprüche, **dadurch gekennzeichnet, dass** der Ansatz (16) seitliche Öffnungen (33) für den Austrag von Spänen besitzt, die bei der Bearbeitung des Kopfes (7) des zu entfernenden Nietes durch die Fräse (15) entstehen.

8. Vorrichtung nach Anspruch 7, **dadurch gekennzeichnet, dass** der Ansatz (16) mindestens eine Führungsfläche (38, 39) für die, während der Bearbeitung des Kopfes (7) des zu entfernenden Nietes durch die Fräse (15), entstehenden Späne besitzt, wobei diese Führungsfläche von dem vorderen Ende (35) des Ansatzes in Richtung seiner seitlichen Austragsöffnungen (33) für die Späne auseinanderläuft.

9. Vorrichtung nach einem der vorhergehenden Ansprüche, **dadurch gekennzeichnet, dass** sie einen radialen, äußeren Schutzbund (74) besitzt.

10. Vorrichtung nach Anspruch 9 in Verbindung mit Anspruch 7 oder 8, **dadurch gekennzeichnet, dass** der Schutzbund (74) gegenüber den seitlichen Austragsöffnungen (33) für die Späne axial nach hinten.und radial nach außen angeordnet ist.

11. Vorrichtung nach einem der vorhergehenden Ansprüche, **dadurch gekennzeichnet, dass** das vordere Ende (21) der Fräse (15) axiale Zähne (22) besitzt, die einen mittleren Raum (29) für die Aufnahme des Schaftes (6) des zu entfernenden Nietes (2) während der Bearbeitung des Kopfes (7) durch die Fräse (15) umgeben.

12. Vorrichtung nach Anspruch 11, **dadurch gekennzeichnet, dass** es sich bei dem Raum (29) für die Aufnahme des Schaftes (6) des zu entfernenden Nietes um einen Zentrierraum der Fräse (15) auf dem Schaft (6) des Nietes (2) während der Bearbeitung ihres Kopfes (7) durch die Fräse (15) handelt.

13. Vorrichtung nach Anspruch 11 oder 12, **dadurch gekennzeichnet, dass** das vordere Ende (21) der Fräse (15) vier axiale Zähne (22) besitzt.

14. Vorrichtung nach einem der Ansprüche 11 bis 13, **dadurch gekennzeichnet, dass** die Zähne (22) der Fräse jeweils einen Schneidwinkel von ungefähr 3° gegenüber einer Ebene orthogonal zur Drehachse (X-X) der Fräse (15) bilden.

15. Verfahren zum Entfernen von Nieten (2), **dadurch gekennzeichnet, dass** man das vordere Ende (35) des Ansatzes (16) einer Vorrichtung (9) zum Entfernen von Nieten nach einem der vorhergehenden Ansprüche auf einer Fläche abstützt, die an den Kopf (7) eines zu entfernenden Nietes (15) angrenzt, indem man die Hackfräse (15) antreibt und sie gleichzeitig zum Bearbeiten des Kopfes (7) des Nietes in Richtung ihrer ausgefahrenen Position bringt und anschließend den Schaft (6) des Nietes (2) entfernt.

## Claims

1. A tool (1) for removing rivets (2), said tool comprising:
a rotary milling cutter (15) having a front end (21) for machining the head (7) of a rivet to be removed; and
a base (16) having a front end (35) for bearing against a surface (8) adjacent to the head of the rivet to be removed;
the milling cutter (15) being mounted to move in translation along its axis of rotation (X-X) relative to the base (16) between a set back position and an advanced position, the tool being **characterized in that** in its advanced position, the front end (21) of the milling cutter (15) is situated at the same level as the front end (35) of the base (16), or slightly set back from said front end (35) of the base (16).

2. A tool according to claim 1, **characterized in that** it further comprises means (46) for adjusting the distance between the front ends (21, 35) of the milling cutter (15) and of the base (16) when the milling cutter (15) is in its advanced position.

3. A tool according to claim 1 or 2, **characterized in that** it further comprises means (70) for returning the milling cutter (15) to its set back position.

4. A tool according to any one of claims 1 to 3, **characterized in that** the base (16) is a base for centering the milling cutter (15) relative to the head (7) of the rivet (2) to be removed.

5. A tool according to any one of claims 1 to 4, **characterized in that** the base (16) surrounds the milling cutter (15).

6. A tool according to claim 5, **characterized in that** the base (16) has a recess (34) opening out in its front end (35) and in which the milling cutter (15) is disposed.

7. A tool according to any one of claims 1 to 6, **characterized in that** the base (16) is provided with side openings (33) for removing the swarf formed while the milling cutter (15) is machining the head (7) of the rivet to be removed.

8. A tool according to claim 7, **characterized in that** the base (16) is provided with at least one guide surface (38, 39) for guiding the swarf produced while the milling cutter (15) is machining the head (7) of the rivet to be removed, said guide surface (38, 39) flaring from the front end (35) of the base towards its side openings (33) for removing swarf.

9. A tool according to any one of claims 1 to 8, **characterized in that** it is provided with an outside protective radial collar (74).

10. A tool according to claim 9, taken in combination with claim 7 or 8, **characterized in that**, relative to the side openings (33) for removing the swarf, the protective collar (74) is situated axially set back and extends radially outwards.

11. A tool according to any one of claims 1 to 10, **characterized in that** the front end (21) of the milling cutter (15) has axial teeth (22) surrounding a central space (29) for receiving the pin (6) of the rivet (2) to be removed, while its head (7) is being machined by the milling cutter (15).

12. A tool according to claim 11, **characterized in that** the space (29) for receiving the pin (6) of the rivet to be removed is a space for centering the milling cutter (15) on the pin (6) of the rivet (2) while the head (7) is being machined by the milling cutter (15).

13. A tool according to claim 11 or 12, **characterized in that** the front end (21) of the milling cutter (15) has four axial teeth (22).

14. A tool according to any one of claims 11 to 13, **characterized in that** each of the teeth (22) of the milling cutter form a cutting angle of about 3° relative to a plane orthogonal to the axis of rotation (X-X) of the milling cutter (15).

15. A method of removing rivets (2), said method being **characterized in that** the front end (35) of the base (16) of a rivet-removing tool (1) according to any one of claims 1 to 14 is pressed against a surface adjacent to the head (7) of a rivet (2) to be removed, and **in that** the milling cutter (15) is rotated while bringing it towards its advanced position so as to machine the head (7) of the rivet, then the pin (6) of the rivet (2) is removed.
